# EUROPEAN PATENT SPECIFICATION

(11) **EP 4 322 355 B1**
(45) Date of publication and mention of the grant of the patent: **12.02.2025**
(21) Application number: 22787296.7
(22) Date of filing: 09.03.2022
(51) Int. Cl.: H02H 9/04, H01H 37/76

(54) **SURGE PROTECTION DEVICE WITH DOUBLE-TRIP MECHANISM**
ÜBERSPANNUNGSSCHUTZGERÄT MIT DOPPELAUSLÖSUNGSMECHANISME
DISPOSITIF DE PROTECTION CONTRE LES SURTENSIONS À DOUBLE MÉCANISME DE DÉCLENCHEMENT

(30) Priority: 16.04.2021 CN 202120789280 U
(43) Date of publication of application: 14.02.2024
(73) Proprietor: Xiamen Set Electronics Co., Ltd, Xiamen, Fujian 361000 (CN)
(72) Inventor: YE, Jian, Xiamen, Fujian 361000 (CN); ZHANG, Xianggui, Xiamen, Fujian 361000 (CN)
(74) Representative: Bayramoglu et al.
(86) International application number: PCT/CN2022/079979
(87) International publication number: WO 2022/218066

(56) References cited:
- CN-A- 105 448 611
- CN-U- 204 857 626
- CN-U- 204 857 626
- CN-U- 213 937 431
- CN-U- 214 588 697
- DE-B3- 102015 000 329
- US-A1- 2014 327 990
- US-A1- 2016 111 871

## Description

### TECHNICAL FIELD

The present disclosure relates to the technical field of surge protection, and in particular to a surge protection device (SPD) with a double-trip mechanism.

### BACKGROUND

As a common low-voltage protection device, an SPD is normally in a high impedance state. In the case of a surge on the circuit due to a lightning strike or other reason, the SPD is connected in a very short time to lead a lightning current or an overvoltage to the ground via a grounding wire, thereby protecting an electrical appliance on the circuit. If the SPD becomes deteriorated for various reasons, heat is dramatically produced in the SPD in the event of a surge. Without the protection action of the SPD, the circuit accident will be aggravated. Due to the single mechanical trip mechanism, existing SPDs have a relatively low trip reliability, and a poor arc extinguishing effect in a high-voltage direct current (DC).

CN 204 857 626 U discloses a surge protection device "SPD" with a double-trip mechanism, comprising a support, a conducting strip, and a foot, wherein the conducting strip is provided on the support; the foot corresponds to the conducting strip and is welded with the conducting strip through a low-temperature alloy; and the SPD further comprises a first trip structure and a second trip structure on the support; the first trip structure comprises a push rod and a first tension spring; and the first tension spring comprises one end connected to the support, and the other end connected to the push rod; the second trip structure comprises a second tension spring; and the second tension spring comprises one end connected to the support; and when the SPD is triggered, the first tension spring drives the push rod to move to the conducting strip and be located between the conducting strip and the foot.

### SUMMARY

In view of defects of the prior art, a technical problem to be solved by the present disclosure is to provide an SPD with a double-trip mechanism.

To solve the above technical problems, the present disclosure provides the following technical solutions: An SPD with a double-trip mechanism includes a frame, an electrode, and a reed, where the electrode is fixedly provided on the frame; the reed corresponds to the electrode and is welded with the electrode through a low-temperature alloy; the SPD further includes two trip structures on the frame; and the two trip structures are respectively a first trip structure and a second trip structure;
the first trip structure includes a slider and a first tension spring; and the first tension spring includes one end connected to the frame, and the other end connected to the slider;
the second trip structure includes a second tension spring; and the second tension spring includes one end connected to the frame, and the other end connected to the reed; and
when the SPD is triggered, the first tension spring drives the slider to move to the electrode and be located between the electrode and the reed, and the second tension spring drives the reed to move toward a direction away from the electrode.

Further, a trip direction of the first tension spring is opposite to a trip direction of the second tension spring.

Further, the first trip structure further includes a first support, a second support, and a rotary post; the rotary post and the second support are arranged on the frame; the rotary post is connected to one end of the first support; the other end of the first support is connected to one end of the slider; the other end of the slider is connected to one end of the first tension spring; and the other end of the first tension spring is connected to the second support.

Further, the first tension spring is extended in response to a normal state of the SPD.

Further, the second tension spring is extended in response to a normal state of the SPD.

Further, a side of the reed toward the second tension spring is provided with a guiding portion, and an end of the slider toward a movement direction of the first tension spring is provided with a guiding surface matching with the guiding portion.

Further, the guiding portion is formed by inclining and extending the side of the reed toward the second tension spring toward the direction away from the electrode.

Further, a groove is formed in a side of the slider toward the reed, and a detecting line for absorbing an arc is provided in the groove.

The present disclosure has the following beneficial effects:
According to the SPD with a double-trip mechanism, the two trip mechanisms are independent of each other. In response to a failure of the first trip mechanism, the second trip mechanism can still work normally. Likewise, in response to a failure of the second trip mechanism, the first trip mechanism can still work normally. This makes the SPD trip normally, and reduces an abnormal tripping probability.

The above description is merely a summary of the technical solutions of the present disclosure. In order to make the technical means of the present disclosure understood more clearly and implemented in accordance with the content of the specification, and in order to make the above and other objectives, features and advantages of the present disclosure more obvious and comprehensible, specific implementations of the present disclosure are described below.

### BRIEF DESCRIPTION OF THE DRAWINGS

To describe the technical solutions in the embodiments of the present disclosure or in the prior art more clearly, the following briefly describes the drawings required for describing the embodiments or the prior art. Apparently, the drawings in the following description merely show some embodiments of the present disclosure, and those of ordinary skill in the art may still derive other drawings from these drawings without creative efforts.
FIG. 1 is a schematic structural view of an SPD with a double-trip mechanism before a trip (a rotary double-trip mechanism);
FIG. 2 is a schematic structural view of an SPD with a double-trip mechanism after a trip (a rotary double-trip mechanism);
FIG. 3 is a schematic view illustrating a detecting line of a double-trip mechanism before a trip; and
FIG. 4 is a schematic structural view of an SPD with a double-trip mechanism (a sliding double-trip mechanism).

### Reference numerals:

1-frame, 2-first tension spring, 3-reed, 4-first support, 5-rotary post, 6-second support, 7-slider, 8-second tension spring, 9-detecting line, 10-electrode, 11-varistor, 12-third tension spring, 13-fourth tension spring, and 14-third support.

### DETAILED DESCRIPTION OF THE EMBODIMENTS

For detailed description on the technical contents, objectives and effects in the present disclosure, the present disclosure is described below with reference to implementations and accompanying drawings.

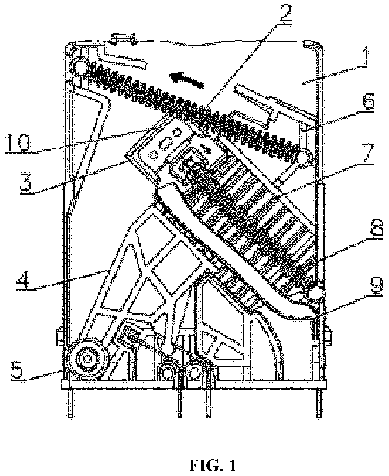

Referring to FIG. 1 to FIG. 4, the present disclosure provides an SPD with a double-trip mechanism, including a frame, an electrode, and a reed. The electrode is fixedly provided on the frame. The reed corresponds to the electrode and is welded with the electrode through a low-temperature alloy. The SPD further includes two trip structures on the frame. The two trip structures are respectively a first trip structure and a second trip structure.

The first trip structure includes a slider and a first tension spring. The first tension spring includes one end connected to the frame, and the other end connected to the slider.

The second trip structure includes a second tension spring. The second tension spring includes one end connected to the frame, and the other end connected to the reed.

When the SPD is triggered, the first tension spring drives the slider to move to the electrode and be located between the electrode and the reed, and the second tension spring drives the reed to move toward a direction away from the electrode.

As can be seen from the above description, the present disclosure has the following beneficial effects:
According to the SPD with a double-trip mechanism provided by the present disclosure, the two trip mechanisms are independent of each other. In response to a failure of the first trip mechanism, the second trip mechanism can still work normally. Likewise, in response to a failure of the second trip mechanism, the first trip mechanism can still work normally. This makes the SPD trip normally, and reduces an abnormal tripping probability.

Further, a trip direction of the first tension spring is opposite to a trip direction of the second tension spring.

As can be seen from the above description, the trip direction of the first tension spring is opposite to the trip direction of the second tension spring, which ensures that the two trip structures do not affect to each other, and the electrode and the reed are kept as far away as possible.

Further, the first trip structure further includes a first support, a second support, and a rotary post. The rotary post and the second support are arranged on the frame. The rotary post is connected to one end of the first support. The other end of the first support is connected to one end of the slider. The other end of the slider is connected to one end of the first tension spring. The other end of the first tension spring is connected to the second support.

As can be seen from the above description, since the first support is connected to the rotary post, when the SPD is abnormal, the support is stressed under the tension spring, thereby driving the slider to rotate along the rotary post, and realizing a trip.

Further, the first tension spring is extended in response to a normal state of the SPD.

As can be seen from the above description, when the PSD is triggered, the extended first tension spring is retracted to realize a trip.

Further, the second tension spring is extended in response to a normal state of the SPD.

As can be seen from the above description, when the PSD is triggered, the extended second tension spring is retracted to realize a trip.

Further, a side of the reed toward the second tension spring is provided with a guiding portion. An end of the slider toward a movement direction of the first tension spring is provided with a guiding surface matching with the guiding portion.

As can be seen from the above description, with cooperation between the guiding portion and the guiding surface, the slider enters a space between the electrode and the reed more smoothly to prevent an abnormal trip.

Further, the guiding portion is formed by inclining and extending the side of the reed toward the second tension spring toward the direction away from the electrode.

Further, a groove is formed in a side of the slider toward the reed, and a detecting line for absorbing an arc is provided in the groove.

As can be seen from the above description, the detecting line for absorbing the arc is provided in the groove of the reed, such that the arc is reduced.

In the embodiment, the electrode is usually an electrode of a voltage-limiting component. The voltage-limiting component includes, but is not limited to, a varistor, a discharge tube, etc.

Referring to FIG. 1 to FIG. 3, the present disclosure provides a first embodiment:

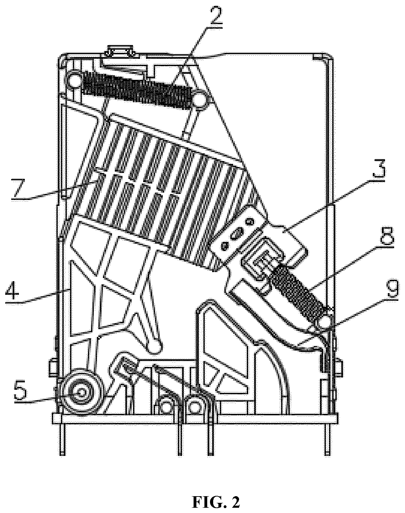

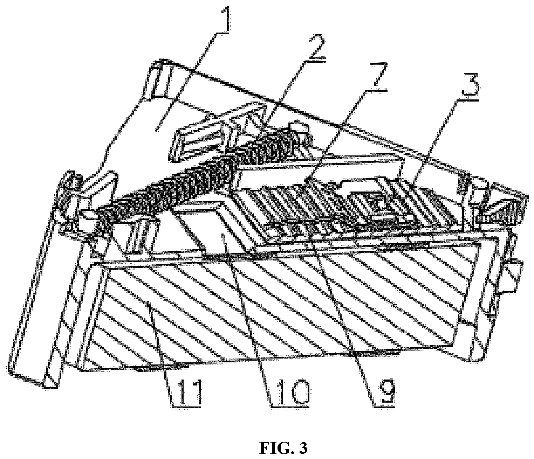

FIG. 1 is a schematic structural view of an SPD with a rotary double-trip mechanism before a trip. FIG. 2 is a schematic structural view of an SPD with a rotary double-trip mechanism after a trip. FIG. 3 is a schematic view illustrating a detecting line of a double-trip mechanism before a trip. According to the SPD with a double-trip mechanism in the embodiment, two trip structures are provided on the frame. The two trip structures are respectively a first trip structure and a second trip structure. Specifically, the SPD specifically includes frame 1, first tension spring 2, reed 3, first support 4, rotary post 5, second support 6, slider 7, second tension spring 8, detecting line 9, electrode 10, and varistor 11. The electrode 10 is fixedly provided on the frame 1. The reed 3 corresponds to the electrode and is welded with the electrode 10 through a low-temperature alloy.

The first trip structure includes the slider 7, the first tension spring 2, the first support 4, the second support 6, and the rotary post 5. The rotary post 5 and the second support 6 are arranged on the frame 1. The rotary post 5 is connected to one end of the first support 4. The other end of the first support 4 is connected to one end of the slider 7. The other end of the slider 7 is connected to one end of the first tension spring 2. The other end of the first tension spring 2 is connected to the second support 6. The first tension spring 2 includes one end connected to the frame 1, and the other end connected to the slider 7.

The second trip structure includes the second tension spring 8. The second tension spring 8 includes one end connected to the frame 1, and the other end connected to the reed 3. A side of the reed 3 toward the second tension spring 8 is provided with a guiding portion. An end of the slider 7 toward a movement direction of the first tension spring 2 is provided with a guiding surface matching with the guiding portion. The guiding portion is formed by inclining and extending the side of the reed 3 toward the second tension spring 8 toward the direction away from the electrode. A groove is formed in a side of the slider 7 toward the reed 3. The detecting line 9 for absorbing an arc is provided in the groove.

In a normal state of the SPD, both the first tension spring 2 and the second tension spring 8 are extended. When the SPD is triggered, the first tension spring 2 drives the slider 7 to move to the electrode 10 and be located between the electrode 10 and the reed 3, and the second tension spring 8 drives the reed 3 to move toward a direction away from the electrode. A trip direction of the first tension spring 2 is opposite to a trip direction of the second tension spring 8, and thus trip processes of the two second tension springs do not affect to each other.

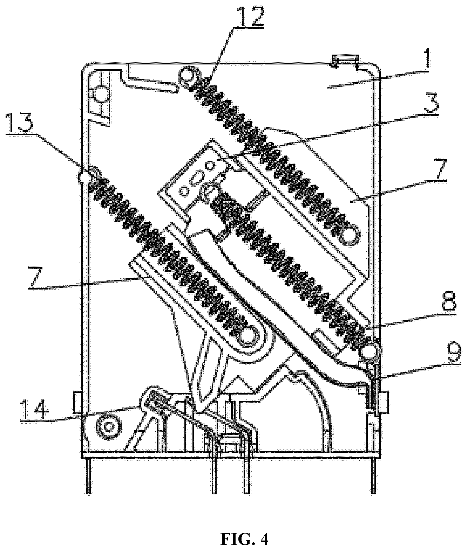

Referring also to FIG. 4, the present disclosure provides a second embodiment:
FIG. 4 is a schematic structural view of an SPD with a sliding double-trip mechanism. According to the SPD with a double-trip mechanism in the embodiment, two trip structures are provided on the frame. The two trip structures are respectively a first trip structure and a second trip structure. Specifically, the SPD specifically includes frame 1, third tension spring 12, fourth tension spring 13, reed 3, third support 14, slider 7, detecting line 9, electrode 10, and varistor 11. The electrode 10 is fixedly provided on the frame 1. The reed 3 corresponds to the electrode and is welded with the electrode 10 through a low-temperature alloy.

The first trip structure includes the slider 7, the third tension spring 12, the fourth tension spring 13, and the third support 14. The third tension spring 12 and the fourth tension spring 13 each include one end provided on the frame, and the other end connected to one end of the slider 7. One end of the slider is connected to the third support 14.

The second trip structure includes the second tension spring 8. The second tension spring 8 includes one end connected to the frame 1, and the other end connected to the reed 3. A side of the reed 3 toward the second tension spring 8 is provided with a guiding portion. An end of the slider 7 toward a movement direction of the first tension spring 2 is provided with a guiding surface matching with the guiding portion. The guiding portion is formed by inclining and extending the side of the reed 3 toward the second tension spring 8 toward the direction away from the electrode. A groove is formed in a side of the slider 7 toward the reed 3. The detecting line 9 for absorbing an arc is provided in the groove.

In a normal state of the SPD, the third tension spring 12, the fourth tension spring 13 and the second tension spring 8 are extended. When the SPD is triggered, the first tension spring 12 and the fourth tension spring 13 drive the slider 7 to move to the electrode 10 and be located between the electrode 10 and the reed 3, and the second tension spring 8 drives the reed 3 to move toward a direction away from the electrode. A trip direction of each of the third tension spring 12 and the fourth tension spring 13 is opposite to a trip direction of the second tension spring 8, and thus trip processes of the two tension springs do not affect to each other.

In conclusion, according to the SPD with a double-trip mechanism provided by the present disclosure, the two trip mechanisms are independent of each other. In response to a failure of the first trip mechanism, the second trip mechanism can still work normally. Likewise, in response to a failure of the second trip mechanism, the first trip mechanism can still work normally. This makes the SPD trip normally, and reduces an abnormal tripping probability.

The foregoing are merely embodiments of the present disclosure and do not constitute a limitation on the scope of the present disclosure.

## Claims

1. A surge protection device "SPD"
with a double-trip mechanism, comprising a frame (1),
an electrode (10), and a reed (3), wherein the electrode (10) is provided on the frame (1); the reed (3) corresponds to the electrode (10) and is welded with the electrode (10) through a low-temperature alloy; and the SPD further comprises a first trip structure and a second trip structure on the frame (1);
the first trip structure comprises a slider (7) and a first tension spring (2); and the first tension spring (2) comprises one end connected to the frame (1), and the other end connected to the slider (7);
the second trip structure comprises a second tension spring (8); and the second tension spring (8) comprises one end connected to the frame (1), and the other end connected to the reed (3); and
when the SPD is triggered, the first tension spring (2) drives the slider (7) to move to the electrode (10) and be located between the electrode (10) and the reed (3), and the second tension spring (8) drives the reed (3) to move toward a direction away from the electrode (10).

2. The SPD with a double-trip mechanism according to claim 1, wherein a trip direction of the first tension spring (2) is opposite to a trip direction of the second tension spring (8).

3. The SPD with a double-trip mechanism according to claim 1, wherein the first trip structure further comprises a first support (4), a second support (6), and a rotary post (5); the rotary post (5) and the second support (6) are arranged on the frame (1); the rotary post (5) is connected to one end of the first support (4); the other end of the first support (4) is connected to one end of the slider (7); the other end of the slider (7) is connected to one end of the first tension spring (2); and the other end of the first tension spring (2) is connected to the second support (6).

4. The SPD with a double-trip mechanism according to claim 3, wherein the first tension spring (2) is extended in response to a normal state of the SPD.

5. The SPD with a double-trip mechanism according to claim 1, wherein the second tension spring (8) is extended in response to a normal state of the SPD.

6. The SPD with a double-trip mechanism according to claim 1, wherein a side of the reed (3) toward the second tension spring (8) is provided with a guiding portion, and an end of the slider (7) toward a movement direction of the first tension spring (2) is provided with a guiding surface matching with the guiding portion.

7. The SPD with a double-trip mechanism according to claim 6, wherein the guiding portion is formed by inclining and extending the side of the reed (3) toward the second tension spring (8) toward the direction away from the electrode (10).

8. The SPD with a double-trip mechanism according to claim 1, wherein a groove is formed in a side of the slider (7) toward the reed (3), and a detecting line (9) for absorbing an arc is provided in the groove.

## Patentansprüche

1. Überspannungsableiter "ÜSA"
mit einem Doppelauslösemechanismus, umfassend einen Rahmen (1),
eine Elektrode (10) und eine Zunge (3), wobei die Elektrode (10) auf dem Rahmen (1) bereitgestellt ist, die Zunge (3) der Elektrode (10) entspricht und mit der Elektrode (10) durch eine Niedertemperaturlegierung verschweißt ist und der ÜSA zudem eine erste Auslösestruktur und eine zweite Auslösestruktur auf dem Rahmen (1) umfasst,
die erste Auslösestruktur einen Schieber (7) und eine erste Zugfeder (2) umfasst und die erste Zugfeder (2) ein Ende umfasst, das mit dem Rahmen (1) verbunden ist, und das andere Ende, das mit dem Schieber (7) verbunden ist,
die zweite Auslösestruktur eine zweite Zugfeder (8) umfasst und die zweite Zugfeder (8) ein Ende umfasst, das mit dem Rahmen (1) verbunden ist, und das andere Ende, das mit der Zunge (3) verbunden ist, und
die erste Zugfeder (2), wenn der ÜSA ausgelöst wird, den Schieber (7) so steuert, dass er sich zur Elektrode (10) bewegt und sich zwischen der Elektrode (10) und der Zunge (3) befindet, und die zweite Zugfeder (8) die Zunge (3) so steuert, dass sie sich in eine Richtung wegführend von der Elektrode (10) bewegt.

2. ÜSA mit einem Doppelauslösemechanismus nach Anspruch 1, wobei eine Auslöserichtung der ersten Zugfeder (2) einer Auslöserichtung der zweiten Zugfeder (8) entgegengesetzt ist.

3. ÜSA mit einem Doppelauslösemechanismus nach Anspruch 1, wobei die erste Auslösestruktur zudem eine erste Halterung (4), eine zweite Halterung (6) und einen Drehständer (5) umfasst, der Drehständer (5) und die zweite Halterung (6) auf dem Rahmen (1) angeordnet sind, der Drehständer (5) mit einem Ende der ersten Halterung (4) verbunden ist, das andere Ende der ersten Halterung (4) mit einem Ende des Schiebers (7) verbunden ist, das andere Ende des Schiebers (7) mit einem Ende der ersten Zugfeder (2) verbunden ist und das andere Ende der ersten Zugfeder (2) mit der zweiten Halterung (6) verbunden ist.

4. ÜSA mit einem Doppelauslösemechanismus nach Anspruch 3, wobei die erste Zugfeder (2) als Reaktion auf einen normalen Zustand des ÜSA gedehnt wird.

5. ÜSA mit einem Doppelauslösemechanismus nach Anspruch 1, wobei die zweite Zugfeder (8) als Reaktion auf einen normalen Zustand des ÜSA gedehnt wird.

6. ÜSA mit einem Doppelauslösemechanismus nach Anspruch 1, wobei eine Seite der Zunge (3) hinführend zur zweiten Zugfeder (8) mit einem Führungsabschnitt versehen ist und ein Ende des Schiebers (7) hinführend zu einer Bewegungsrichtung der ersten Zugfeder (2) mit einer zum Führungsabschnitt passenden Führungsfläche versehen ist.

7. ÜSA mit einem Doppelauslösemechanismus nach Anspruch 6, wobei der Führungsabschnitt durch Neigen und Ausdehnen der Seite der Zunge (3) hinführend zur zweiten Zugfeder (8) in die Richtung wegführend von der Elektrode (10) ausgebildet ist.

8. ÜSA mit einem Doppelauslösemechanismus nach Anspruch 1, wobei eine Nut in einer Seite des Schiebers (7) hinführend zur Zunge (3) ausgebildet ist und eine Erfassungslinie (9) zum Absorbieren eines Bogens in der Nut bereitgestellt ist.

## Revendications

1. Dispositif de protection contre les surtensions « SPD »
à double mécanisme de déclenchement, comprenant un cadre (1),
une électrode (10) et une lame (3), dans lequel l'électrode (10) est prévue sur le cadre (1) ; la lame (3) correspond à l'électrode (10) et est soudée avec l'électrode (10) à travers un alliage à basse température ; et le SPD comprend en outre une première structure de déclenchement et une deuxième structure de déclenchement sur le cadre (1) ;
la première structure de déclenchement comprend un curseur (7) et un premier ressort de tension (2) ; et le premier ressort de tension (2) comprend une extrémité reliée au cadre (1), et l'autre extrémité reliée au curseur (7) ;
la deuxième structure de déclenchement comprend un deuxième ressort de tension (8) ; et le deuxième ressort de tension (8) comprend une extrémité reliée au cadre (1), et l'autre extrémité reliée à la lame (3) ; et
lorsque le SPD est déclenché, le premier ressort de tension (2) entraîne le curseur (7) à se déplacer vers l'électrode (10) et est situé entre l'électrode (10) et la lame (3), et le deuxième ressort de tension (8) entraîne la lame (3) à se déplacer vers une direction s'éloignant de l'électrode (10).

2. SPD à double mécanisme de déclenchement selon la revendication 1, dans lequel une direction de déclenchement du premier ressort de tension (2) est opposée à une direction de déclenchement du deuxième ressort de tension (8).

3. SPD à double mécanisme de déclenchement selon la revendication 1, dans lequel la première structure de déclenchement comprend en outre un premier support (4), un deuxième support (6) et un pion rotatif (5) ; le pion rotatif (5) et le deuxième support (6) sont disposés sur le cadre (1) ; le pion rotatif (5) est raccordé à une extrémité du premier support (4) ; l'autre extrémité du premier support (4) est raccordée à une extrémité du curseur (7) ; l'autre extrémité du curseur (7) est raccordée à une extrémité du premier ressort de tension (2) ; et l'autre extrémité du premier ressort de tension (2) est raccordée au deuxième support (6).

4. SPD à double mécanisme de déclenchement selon la revendication 3, dans lequel le premier ressort de tension (2) s'étend en réponse à un état normal du SPD.

5. SPD à double mécanisme de déclenchement selon la revendication 1, dans lequel le deuxième ressort de tension (8) s'étend en réponse à un état normal du SPD.

6. SPD à double mécanisme de déclenchement selon la revendication 1, dans lequel un côté de la lame (3) vers le deuxième ressort de tension (8) est pourvue d'une partie de guidage, et une extrémité du curseur (7) vers une direction de déplacement du premier ressort de tension (2) est pourvue d'une surface de guidage correspondant à la partie de guidage.

7. SPD à double mécanisme de déclenchement selon la revendication 6, dans lequel la partie de guidage est formée en inclinant et en étendant le côté de la lame (3) vers le deuxième ressort de tension (8) vers la direction s'éloignant de l'électrode (10).

8. SPD à double mécanisme de déclenchement selon la revendication 1, dans lequel une rainure est formée dans un côté du curseur (7) vers la lame (3), et une ligne de détection (9) pour absorber un arc est prévue dans la rainure.
